# EUROPEAN PATENT APPLICATION

(11) **EP 3 902 172 A1**
(43) Date of publication of application: **27.10.2021**
(21) Application number: 21164513.0
(22) Date of filing: 24.03.2021
(51) Int. Cl.: H04L 1/18

(54) **SERVER SYSTEM, DATA TRANSMISSION SYSTEM, AND DATA TRANSMISSION METHOD THEREOF**

(30) Priority: 24.04.2020 TW 109113784
(71) Applicant: Pegatron Corporation, Taipei City 112 (TW)
(72) Inventor: CHEN, Wei-Ling, 112 Taipei City (TW); LIN, Po-Han, 112 Taipei City (TW); CHEN, Jui-Ho, 112 Taipei City (TW)
(74) Representative: Viering, Jentschura & Partner mbB Patent- und Rechtsanwälte

(57) **Abstract**

A server system, a data transmission system and a data transmission method thereof are disclosed. The data transmission method includes the following steps: dividing a piece of data into a plurality of packets by the server system; transmitting an nth packet to a device end by the server system, wherein n is greater than or equal to 1; transmitting an (n+1)th packet after the nth packet is transmitted by the server system; and receiving an nth acknowledgement generated by the device end based on receiving the nth packet from the server system, wherein it is earlier to transmit the (n+1)th packet than to receive the nth acknowledgement.

## Description

### BACKGROUND OF INVENTION

### 1. Technology Field

The disclosure relates generally to a server system, a data transmission system and a data transmission method thereof, and more particularly to a server system, a data transmission system and a data transmission method thereof that can effectively reduce data transmission time.

### 2. Description of Related Art

A conventional networking device existing in the current market is limited to its specifications and may only execute simplex transmissions based on OTA (Over-the-Air) Technology. Therefore, in the prior art, the updating packets and acknowledgements are transmitted through a one-request-one-answer method, and updating is performed after each transmission. This process is repeated continuously till the entire updating process is finished.

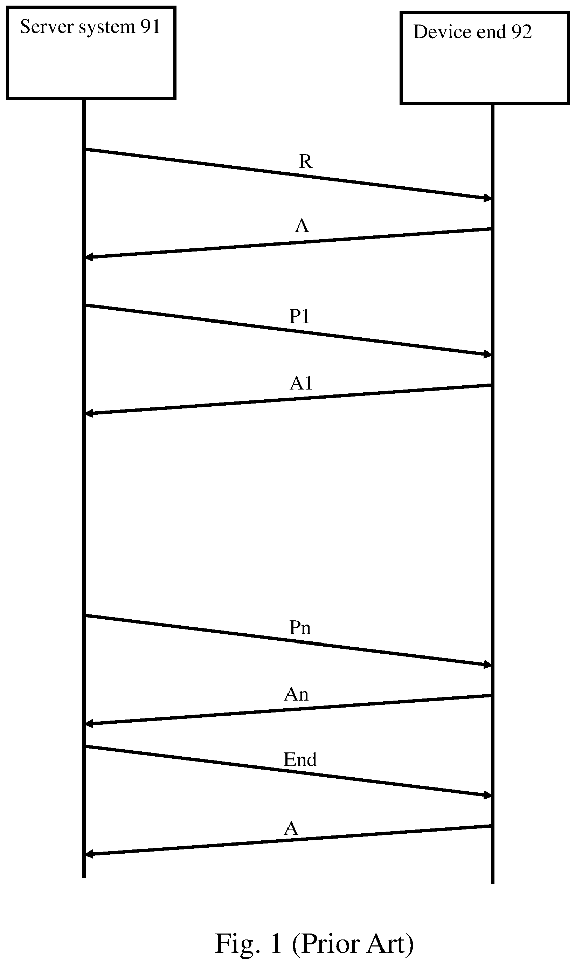

Here, please refer to Fig. 1, which shows a schematic view of the data transmission procedures in the prior art.

When updating is started, the server system 91 sends an updating request R to the device end 92, and after the device end 92 answers with an acknowledgement (Ack) A, the packets are transmitted batch by batch. After the server system 91 sends a packet PI, the device end 92 starts to check the packet P1 and write it into the memory for updating. Once the packet P1 is confirmed and successfully entered, it sends back an acknowledgement A1. By now, the transmission of the first packet P1 is finished. The above process will be repeated till the last packet Pn is transmitted and the last acknowledgement An is received. Now, all files have been transmitted. In the end, the server system 91 sends an End request to finish the updating process. After the device end 92 answers with an acknowledgement A, the updating is finished. Therefore, the time used to transmit the first packet includes the packet sending time, packet storing and processing time, acknowledgement sending time, and some gap time when the server system 91 gets ready to process the next packet. According to the results of actual measurements, if the file size is 100K bytes, the size of a packet is 128 bytes, and the total number of packets is 800. At a Baud rate of 115200, transmitting a packet of 128 bytes takes approximately 0.0133 seconds. Also according the results of actual measurements, the preparation time for the server system 91 to get ready for processing the next packet is approximately 0.004 seconds, the time used by the device end 92 to store and process the packet is approximately 0.015 seconds, and the time used to transmit the acknowledgement is approximately 0.0003 seconds. Therefore, theoretically, the time from the updating request to the end of updating is approximately (0.0133 + 0.015 + 0.0003 + 0.004) * 800 =26.08 seconds. The above calculation is an estimated result in an ideal state. In practice, the time used in processing different packets may differ and some errors may occur. Hence, through actual measurements, the following results are found: When the file size is 100K bytes, the actual updating time is approximately 26.3 seconds; when the file size is 400K bytes, the actual updating time is 78.3 seconds; and when the file size is 900K bytes, the actual updating time is 165.5 seconds. In a one-request-one-answer method, if the packet is too large, the updating time will be too long. On a device end 92 without a specific display, the user may mistakenly think the system is crashed.

Hence, there is a necessity to invent a new server system, a data transmission system and a data transmission method thereof to make an improvement over the prior art.

### SUMMARY OF THE INVENTION

The main object of the present invention is to provide a data transmission system which has a function to effectively reduce the data transmission time.

Another object of the present invention is to provide a data transmission method to be used for the above data transmission system.

A further object of the present invention is to provide a server system.

To achieve the above objects, the data transmission system of the present invention includes a server system and a device end. The server system includes a packet generating module and a first transmission module. The packet generating module is used to divide a piece of data into a plurality of packets. The first transmission module is electronically connected to a packet generating module and is used to transmit a plurality of packets. The device end includes a second transmission module and a packet processing module. The second transmission module is used to receive the plurality of packets. The packet processing module is electronically connected to the second transmission module and is used to store a plurality of packets and to generate a plurality of acknowledgements according to the plurality of packets, wherein the plurality of acknowledgements are sent back to the first transmission module of the server system through the second transmission module; wherein, after the first transmission module of the server system transmits an nth packet to the device end, the packet processing module of the device end generates an nth acknowledgement based on the nth packet, wherein n is greater than or equal to 1 but lower than m, wherein m is the total number of the plurality of packets; wherein after the first transmission module transmits the nth packet, the first transmission module continuously transmits the (n+1)th packet and receive the nth acknowledgement from the device end; in particular, it is earlier to transmit the (n+1)th packet than to receive the nth acknowledgement.

The data transmission method of the present invention includes the following steps: dividing a piece of data into a plurality of packets by the server system; transmitting the nth packet to the device end by the server system, wherein n is greater than or equal to 1 but lower than m, wherein m is the total number of the plurality of packets; transmitting an (n+1)th packet after the nth packet is transmitted by the server system; and receiving an nth acknowledgement generated by the device end based on receiving the nth packet from the server system; wherein it is earlier to transmit the (n+1)th packet than to receive the nth acknowledgement.

The server system of the present invention is connected to a device end. The server system includes a packet generating module and a first transmission module. The packet generating module is used to divide a piece of data into a plurality of packets. The first transmission module is electronically connected to the packet generating module to transmit the plurality of packets to the device end; wherein, after the first transmission module transmits the nth packet to the device end, the first transmission module continuously transmits the (n+1)th packet to the device end and receives the nth acknowledgement from the device end, wherein n is greater than or equal to 1 but lower than m, wherein m is the total number of the plurality of packets; wherein it is earlier to transmit the (n+1)th packet than to receive the nth acknowledgement.

### BRIEF DESCRIPTION OF THE DRAWINGS

Fig. 1 is a schematic view of the prior-art data transmission procedures.
Fig. 2 is an architectural diagram of the data transmission system of the present invention.
Fig. 3 is a process flowchart of the data transmission method of the present invention.
Fig. 4 is a schematic view of the data transmission procedures of the present invention.

### DETAILED DESCRIPTION OF THE INVENTION

In order for the esteemed auditors to better understand the technical features of the present invention, detailed descriptions are provided below with reference to a preferred embodiment.

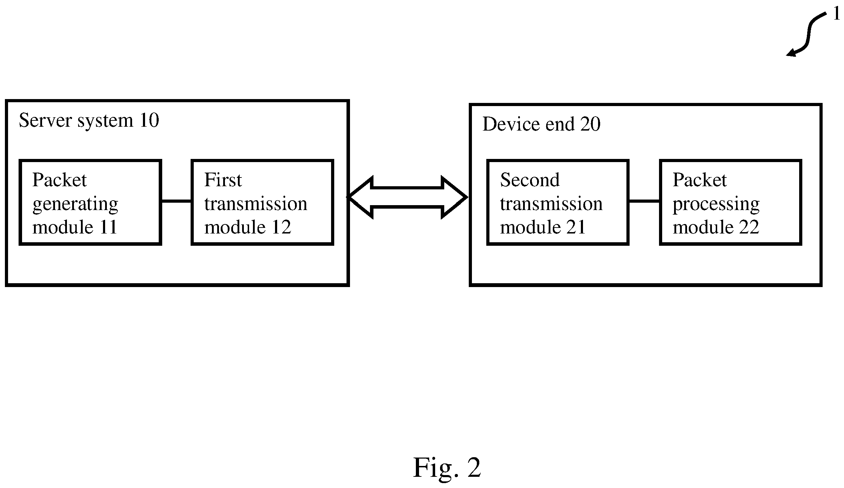

Now please refer to Fig. 2, which is an architectural diagram of the data transmission system of the present invention.

The data transmission system 1 of the present invention includes a server system 10 and a device end 20. The server system 10 can transmit data to a device end 20 to update or control the device end 20. The device end 20 is an IOT device using a single-core processor, or a computer system, or an ordinary household appliance. The present invention does not limit the types of the device end 20. The server system 10 includes a packet generating module 11 and a first transmission module 12. The packet generating module 11 is used to divide the piece of data to be transmitted into a plurality of packets. The first transmission module 12 is electronically connected to the packet generating module 11, is capable of wired or wireless transmission, and is used to transmit the plurality of packets divided by the packet generating module 11 to the device end 20. The device end 20 includes a second transmission module 21 and a packet processing module 22. The second transmission module 21 can be a module having the same data transmission function as the first transmission module 12 and is used to receive the plurality of packets transmitted from the first transmission module 12. In an embodiment of the present invention, the first transmission module 12 and the second transmission module 21 are interconnected through a wired UART (Universal Asynchronous Receiver/Transmitter) interface. However, the present invention is not limited to this kind of connection. The packet processing module 22 is electronically connected to the second transmission module 21 and is used to generate a plurality of acknowledgements based on the plurality of packets to be sent back to the first transmission module 12 of the server system 10 through the second transmission module 21. In the end, the packet processing module 22 restores the plurality of packets into updated data. Because the above-mentioned technology of dividing data into a plurality of packets and restoring the packets into updated data is not the important part of the present invention, no further detailed descriptions are provided herein.

After the first transmission module 12 of the server system 10 transmits a packet, there will be a series of a packet sending time, a packet storing and processing time, and an acknowledgement sending time before an acknowledgement is received to finish an entire packet transmission process. In the procedures of one embodiment of the present invention, the first transmission module 12 transmits packets continuously; i.e., after one packet is sent, the first transmission module 12 transmits the next packet without waiting for reception of an acknowledgement. Thus, it can reduce the transmission time. In other word, after the first transmission module 12 transmits the nth packet to the device end 20, the packet processing module 22 of the device end 20 generates an nth acknowledgement based on the nth packet, wherein n is larger than or equal to 1 but smaller than the total number of the plurality of packets. After the nth packet is transmitted, the first transmission module 12 continuously transmits the (n+1)th packet generated by the packet generating module 11 of the server system 10. Due to the time of transmission, it is earlier to transmit the (n+1)th packet than to receive the nth acknowledgement; i.e., the packet generating module 11 receives the nth acknowledgement from the first transmission module 12 after the (n+1)th packet is transmitted.

After the packet processing module 22 of the device end 20 has processed the nth packet and the first transmission module 12 of the server system 10 has received the nth acknowledgement, the first transmission module 12 starts to transmit the (n+2)th packet generated by the packet generating module 11 of the server system 10. In the end, when the first transmission module of the server system 10 continuously receives an (m-1)th acknowledgement and an mth acknowledgement but no longer transmits new packets, the packet generating module 11 finishes the data transmission process, wherein m is larger than 1 and is the total number of the plurality of packets.

It is to be noted that the modules of the data transmission system 1 can be constructed through hardware devices, a combination of software programs and hardware devices, or a combination of firmware and hardware devices. The present invention is not limited to the above forms of construction. Moreover, the above implementation is just a preferred embodiment of the present invention. In order to avoid superfluous descriptions, other optional variations or combinations are not detailed. However, for those skilled in the art, it shall be readily understood that the above modules or components may not be all necessary, and for implementation of the present invention, other more-detailed prior-art modules or components may be included. Each module or component may be removed or modified as needed, and there may be other modules or components between any two modules.

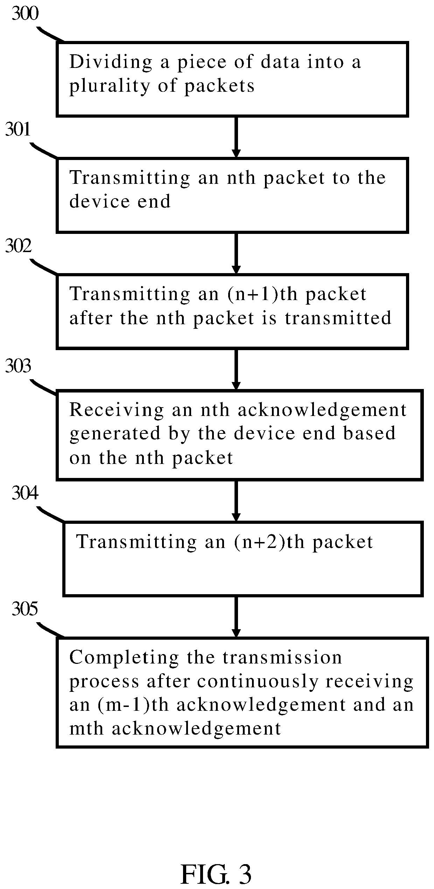

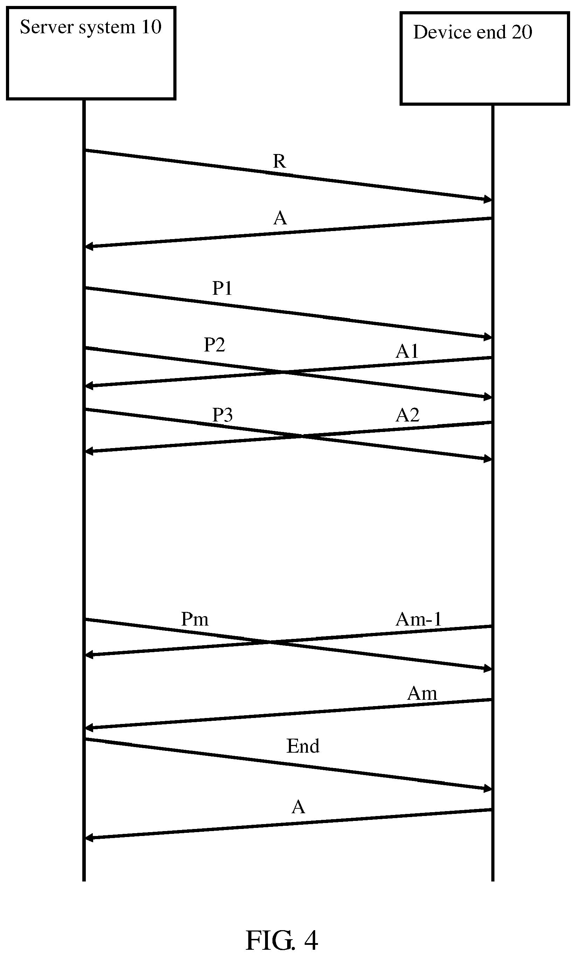

Now, please further refer to Fig. 3 for a process flowchart of the data transmission method of the present invention and to Fig. 4 for a schematic view of the data transmission procedures of the present invention. Here, it is to be noted that the data transmission method of the present invention is described below with reference to the above data transmission system 1 as an example, but the data transmission method of the present invention is not limited to using a data transmission system 1 with a structure similar to what is described above.

First, the server system 10 executes Step 300: dividing a piece of data into a plurality of packets.

The transmission process will not start until the packet generating module 11 divides the piece of data to be transmitted into a plurality of packets. It is to be noted that, when data transmission is started, the server system 10 must send an updating request R to the device end 20 and start to transmit packets batch by batch after the device end 20 answers with an acknowledgement A. In the end, the server system 10 sends an ending request End to finish the updating procedure. After the device end 20 answers with an acknowledgement A, the data transmission is finished. As the above process is not the important part of the invention, it is not detailed herein.

Then the server system 10 executes step 301: transmitting an nth packet to the device end.

The first transmission module 12 transmits an nth packet; i.e., the first transmission module 12 starts to transmit the first packet P1 to the second transmission module 21 of the device end 20. Now, the packet processing module 22 stores the first packet PI, generates a first acknowledgement A1 based on the first packet PI, and sends it back to the server system 10. Meanwhile, the server system 10 executes Step 302: transmitting an (n+1)th packet after the nth packet is transmitted.

After the nth packet is transmitted, the server system 10 continuously transmits an (n+1)th packet; i.e., after the first transmission module 12 has finished transmitting the first packet PI, the packet generating module 11 causes the first transmission module 12 to continue to transmit the second packet P2. Here, the time interval between transmissions of the nth packet and the (n+1)th packet generated by the packet generating module 11 through the first transmission module 12 is slightly longer than the time used by the server system 10 to transmit one single packet to the device end 20; i.e., the time interval between transmissions of certain two continuous packets transmitted by the first transmission module 12 is longer than the time used by the server system 10 to transmit one single packet to the device end 20. When a packet of 128 bytes is transmitted at a Baud rate of 115200, the time used by the server system 10 to transmit one single packet to the device end 20 will be approximately 0.0133 seconds. Between the completions of the transmission the first packet P1 and the transmission of the second packet P2 generated by the packet generating module 11 through the first transmission module 12 is a buffer time of 0.001 seconds to avoid disorder due to overlapping. Therefore, after the transmission of the first packet P1 is started 0.0133 + 0.001 seconds, the second packet P2 will be transmitted.

Then the server system 10 executes Step 303: receiving an nth acknowledgement generated by the device end based on the nth packet.

After the transmission of the second packet P2, the first transmission module 12 receives the first acknowledgement A sent by the second transmission module 21. Therefore, the time interval between transmissions of the first packet P1 and the second packet P2 generated by the packet generating module 11 through the first transmission module 12 is shorter than the time used by the server system to receive the first acknowledgement A; i.e., it is shorter than the sum of the time used by the server system 10 to transmit one single packet to the device end 20, the time used by the packet processing module 22 to store and process the packet, and the time used to transmit the acknowledgement, such that the server system 10 can send an (n+1)th packet before receiving the nth acknowledgement. In the present embodiment, the time used by the packet processing module 22 to store and process a packet is 0.015 seconds and the time used to transmit the acknowledgement is 0.0003 seconds; therefore, the time interval between the first packet P1 and the second packet P2 is shorter than 0.0153 seconds but longer than 0.0133 seconds.

Now the second transmission module 21 simultaneously receives the second packet P2 and causes the packet processing module 22 to generate a second acknowledgement based on the second packet. After the second packet P2 is stored, a second acknowledgement A2 is generated and sent back to the server system 10.

Then the server system 10 executes Step 304: transmitting an (n+2)th packet.

Then the server system 10 further sends an (n+2)th packet; i.e., the first transmission module 12 transmits a third packet P3 generated by the packet generating module 11 to the device end 20. The time interval between transmissions of the first packet P1 and the third packet P3 generated by the packet generating module 11 through the first transmission module 12 is longer than the sum of the time used by the server system 10 to transmit one single packet to the device end 20, the time used by the packet processing module 22 to store and process the packet and the time used to transmit the acknowledgement; i.e., the server system 10 sends the (n+2)th packet after receiving the nth acknowledgement so as to avoid channel jamming due to intense transmissions. In the present embodiment, the time used by the packet processing module 22 to store and process the packet is 0.015 seconds and the time used to transmit the acknowledgement is 0.0003 seconds; therefore, the time interval between the first packet P1 and the third packet P3 is longer than 0.0153 seconds. The time interval between the first packet P1 and the second packet P2 is shorter than the sum of the time used by the server system 10 to transmit one single packet to the device end 20 and the time used by the packet processing module 22 to store and process the packet and to send the acknowledgement.

In terms of theoretical values, the time used to transmit the first packet PI, second packet P2 and third packet P3 shall take into consideration of all the time used by the server system 10 to transmit one single packet to the device end 20. However, for the remaining packets, the time used to process the packets and transmit the acknowledgements may overlap. It is expected that the total transmission time is shorter. Therefore, the time interval between transmissions of the first packet P1 and the second packet P2 transmitted by the first transmission module 12 is shorter than the sum of the time used by the server system 10 to transmit one single packet to the device end 20, the time used by the packet processing module 22 to store and process the packet, and the time used to transmit the acknowledgement. Further, the time interval between transmissions of the first packet P1 and the third packet P3 transmitted by the first transmission module 12 is longer than the sum of the time used by the server system 10 to transmit one single packet to the device end 20, the time used by the packet processing module 22 to store and process the packet, and the time used to transmit the acknowledgement. Consequently, as long as the time interval between transmissions of the (n+1)th packet and the (n+2)th packet transmitted by the first transmission module 12 is shorter than the sum of the time used by the packet processing module 22 to store and process the packet and the time used to transmit the acknowledgement, the time interval between transmissions of the (n+1)th packet and (n+3)th packet transmitted by the first transmission module 12 is longer than the sum of the time used by the packet processing module 22 to store and process the packet and the time used to transmit the acknowledgement.

Thus, the time interval between transmissions of two continuous packets (i.e., the nth packet and (n+1)th packet) by the first transmission module 12 can be reduced to increase the speed of transmission, and the time before transmission of the third packet by the first transmission module 12 (i.e., the time interval between the nth packet and the (n+2)th packet) will not be so short as to cause channel jamming. As the packet sizes, transmission speed and processing speed are all known values, the above values can be used by the packet generating module 11 to set the time interval between transmissions of the nth packet and the (n+1)th packet and also the time interval between transmissions of the nth packet and the (n+2)th packet.

After the above continuous steps, the device end 20 transmits an (m-1)th acknowledgement Am-1, and the server system 10 executes Step 305: completing the transmission process after continuously receiving an (m-1)th acknowledgement and an mth acknowledgement, wherein m is larger than 1 and is the total number of the plurality of packets.

Now the second transmission module 21 sends the (m-1)th acknowledgement Am-1 back to the server system 10, and the first transmission module 12 transmits the mth packet Pm to the device end 20. The device end 20 receives the mth packet to generate an mth acknowledgement Am and then send the mth acknowledgement Am back to the server system 10. Thus, after the server system 10 receives the (m-1)th acknowledgement Am-1 and the mth acknowledgement Am, the packet generating module 11 finishes the data transmission process.

Here, it is to be noted that the data transmission method of the present invention is not limited to the above described order of steps. The order of steps can be changed as long as the object of the present invention can be achieved.

Thus, in terms of theoretical values, the time interval between transmissions of the first packet P1 and the second packet P2 is 0.0133 + 0.001 seconds, and for the remaining packets, as the processing time and acknowledgement sending time will overlap, the transmission time is estimated to be reduced to 0.009 seconds. The preparation time for the server system 10 to prepare to send the next packet is approximately 0.004 seconds, the time used by the device end 20 to store and process the packet is approximately 0.015 seconds, and the time used to transmit the acknowledgement is approximately 0.0003 seconds. Therefore, after the second packet P2, the time of transmitting each packet is approximately 0.009 + 0.015 + 0.0003 + 0.004 seconds. Thus, if the total number of packets is 800, the estimated time from the first packet P1 to the last packet is approximately 0.0133 + 0.001 + (0.009 + 0.015 + 0.0003 + 0.004) * 799 = 22.626 seconds.

It is to be noted, however, that the above calculation is an estimated result in an ideal state. In actual operations, the time of processing different packets may differ and errors may occur. Hence, actual measurements were made, and according to the measurements, when the file size is 100K bytes, the actual updating time using the present invention is 23.7 seconds, 2.6 seconds shorter than the prior art, with an approximate 9.8% reduction of the time. Using the present invention, when the file size is 400K bytes, the actual updating time is 68.6 seconds, 9.7 seconds shorter than the prior art, with an approximate 12.3% reduction of the time. When the file size is 900K bytes, the actual updating time using the present invention is 140.9 seconds, 24.6 seconds shorter than the prior art, with an approximate 14.8% reduction of the time. Therefore, the data transmission system 1 of the present invention can effectively reduce the data transmission time, and the optimization effect is better when the file size is larger.

Although the invention has been explained in relation to its preferred embodiment, it is to be understood that many other possible modifications and variations can be made without departing from the spirit and scope of the invention as hereinafter claimed.

## Claims

1. A data transmission method, performed by a server system (10), to transmit data to a device end (20), the method including:
dividing a piece of data into a plurality of packets (PI) by the server system (10);
transmitting an nth packet (PI) to the device end (20) by the server system (10), wherein n is larger than or equal to 1 but lower than m, wherein m is the total number of the plurality of packets (PI);
transmitting an (n+1)th packet (PI) after the nth packet (PI) is transmitted by the server system (10); and
receiving an nth acknowledgement (A) generated by the device end (20) based on receiving the nth packet (PI) from the server system (10), wherein it is earlier to transmit the (n+1)th packet (PI) than to receive the nth acknowledgement (A).

2. The data transmission method defined in Claim 1, which further includes the following step:
setting the time interval between transmissions of the nth packet (PI) and the (n+1)th packet (PI) by the server system (10) to be longer than the time used to send one single packet (PI) from the server system (10) to the device end (20).

3. The data transmission method defined in any of Claims 1-2, which further includes the following step:
setting the time interval between transmissions of a first packet (PI) and a second packet (P2) by the server system (10) to be shorter than the sum of the time used to send one single packet (PI) from the server system (10) to the device end (20), the time used to store and process the packet (PI) and the time used to transmit the acknowledgement (A).

4. The data transmission method defined in any of Claims 1-2, which further includes the following step:
setting the time interval between transmissions of the (n+1)th packet (PI) and an (n+2)th packet (PI) by the server system (10) to be shorter than the sum of the time used to store and process the packet (PI) and the time used to transmit the acknowledgement (A).

5. The data transmission method defined in any of Claims 1-4, which further includes the following step:
transmitting an (n+2)th packet (PI) after the server system (10) receives the nth acknowledgement (A).

6. The data transmission method defined in any of Claims 1-5, which further includes the following step:
setting the time interval between transmissions of a first packet (PI) and a third packet (P3) by the server system (10) to be longer than the sum of the time used to send one single packet (PI) from the server system (10) to the device end (20), the time used to store and process the packet (PI), and the time used to transmit the acknowledgement (A).

7. The data transmission method defined in any of Claims 1-5, which further includes the following step:
setting the time interval between transmissions of the (n+1)th packet (PI) and an (n+3)th packet (PI) by the server system (10) to be longer than the sum of the time used to store and process the packet (PI) and the time used to transmit the acknowledgement (A).

8. A data transmission system (1), including:
a server system (10), including:
a packet generating module (11), used to divide a piece of data into a plurality of packets (PI); and
a first transmission module (12), electronically connected to the packet generating module (11) and used to transmit the plurality of packets (PI); and
a device end (20), including:
a second transmission module (21), used to receive the plurality of packets (PI);
a packet processing module (22), electronically connected to the second transmission module (21) and used to store the plurality of packets (PI) and to generate a plurality of acknowledgements (A) based on the plurality of packets (PI), wherein the plurality of acknowledgements (A) are sent back to the first transmission module (12) of the server system (10) through the second transmission module (21); wherein, after the first transmission module (12) of the server system (10) transmits an nth packet (PI) to the device end (20), the packet processing module (22) of the device end (20) generates an nth acknowledgement (A) based on the nth packet (PI), wherein n is larger than or equal to 1 but lower than m, wherein m is the total number of the plurality of packets (PI);
wherein, after the first transmission module (12) transmits the nth packet (PI), the first transmission module (12) continuously transmits an (n+1)th packet (PI) and receives the nth acknowledgement (A) from the device end (20), wherein it is earlier to transmit the (n+1)th packet (PI) than to receive the nth acknowledgement (A).

9. The data transmission system (1) defined in Claim 8, wherein the time interval between transmissions of the nth packet (PI) and the (n+1)th packet (PI) generated by the packet generating module (11) through the first transmission module (12) is longer than the time used to send one single packet (PI) from the server system (10) to the device end (20).

10. The data transmission system (1) defined in any of Claims 8-9, wherein the time interval between transmissions of a first packet (PI) and a second packet (P2) generated by the packet generating module (11) through the first transmission module (12) is shorter than the sum of the time used to send one single packet (PI) from the server system (10) to the device end (20), the time used by the packet processing module (22) to store and process the packet (PI), and the time used to transmit the acknowledgement (A).

11. The data transmission system (1) defined in any of Claims 8-9, wherein the time interval between transmissions of the (n+1)th packet (PI) and an (n+2)th packet (PI) generated by the packet generating module (11) through the first transmission module (12) is shorter than the time used by the packet processing module (22) to store and process the packet (PI) and the time used to transmit the acknowledgement (A).

12. The data transmission system (1) defined in any of Claims 8-9, wherein after receiving the nth acknowledgement (A), the first transmission module (12) transmits an (n+2)th packet (PI) generated by the packet generating module (11) of the server system (10).

13. The data transmission system (1) defined in any of Claims 8-12, wherein the time interval between transmissions of a first packet (PI) and a third packet (P3) generated by the packet generating module (11) through the first transmission module (12) is longer than the sum of the time used to send one single packet (PI) from the server system (10) to the device end (20), the time used by the packet processing module (22) to store and process the packet (PI), and the time used to transmit the acknowledgement (A).

14. The data transmission system (1) defined in any of Claims 8-12, wherein the time interval between transmissions of the (n+1)th packet (PI) and an (n+3)th packet (PI) generated by the packet generating module (11) through the first transmission module (12) is longer than the sum of the time used by the packet processing module (22) to store and process the packet (PI) and the time used to transmit the acknowledgement (A).
